Europäisches Patentamt

European Patent Office

Office européen des brevets

(11) Veröffentlichungsnummer: **0 293 644 B1**

# (12) EUROPÄISCHE PATENTSCHRIFT

(45) Veröffentlichungstag der Patentschrift: **25.03.92**

(51) Int. Cl.⁵: **G06F 15/70**

(21) Anmeldenummer: **88107514.7**

(22) Anmeldetag: **10.05.88**

(54) **Verfahren zur Ermittlung von Bewegungsvektorfeldern aus digitalen Bildsequenzen.**

(30) Priorität: **02.06.87 DE 3718491**

(43) Veröffentlichungstag der Anmeldung:
**07.12.88 Patentblatt 88/49**

(45) Bekanntmachung des Hinweises auf die
Patenterteilung:
**25.03.92 Patentblatt 92/13**

(84) Benannte Vertragsstaaten:
**AT BE CH DE FR GB IT LI LU NL SE**

(56) Entgegenhaltungen:
**GB-A- 2 172 171**

**PROCEEDINGS: WORKSHOP ON MOTION: REPRESENTATION AND ANALYSIS, 7.-9. Mai 1986, Seiten 81-87, IEEE, South Carolina, US; W. ENKELMANN: "Investigations of multigrid algorithms for the estimation of optical flow fields in image sequences"**

(73) Patentinhaber: **SIEMENS AKTIENGESELL-SCHAFT**
**Wittelsbacherplatz 2**
**W-8000 München 2(DE)**

(72) Erfinder: **Von Brandt, Achim, Dr.**
**am Eschbichl 7a**
**W-8000 München 81(DE)**

**Beschreibung**

Die vorliegende Erfindung bezieht sich auf ein Verfahren zur Ermittlung von Bewegungsvektorfeldern aus digitalen Bildsequenzen, das aus jeweils zwei aufeinanderfolgenden Bildern ein Bewegungsvektorfeld berechnet, welches jedem Bildpunkt eines Bildes einen Bildpunkt des anderen Bildes zuordnet, wobei die Zuordnung jeweils durch einen Bewegungsvektor definiert ist, welcher die relative Verschiebung der Bildpunkte gegeneinander wiedergibt, und wobei jeweils alle Bildpunkte in einem quadratischen oder rechteckigen Block von Bildpunkten den gleichen Bewegungsvektor erhalten.

Für verschiedene Anwendungsfälle, z. B. Bilddatenkompression oder maschinelles Sehen (Roboter, Szenenanalyse), ist es erforderlich, die in einer digitalen Bildsequenz vorhandenen Verschiebungen der Bildinhalte von Bild zu Bild, die sich aus Objektbewegungen oder auch Kamerabewegungen ergeben, automatisch zu erfassen. Diese Verschiebungen der lokalen Bildinhalte können durch Bewegungsvektorfelder dargestellt werden, welche z. B. zu jedem Bildpunkt eines Bildes angeben, um wieviel sich der Bildinhalt an dieser Stelle gegenüber dem vorherigen Bild verschoben hat.

Die Bewegungsvektorfelder werden z. B. in der Bilddatenkompression zum Zwecke der Übertragung digitaler Bilder mit niedrigen Datenraten dazu verwendet, aus bereits übertragenen Bildern das nächste, noch nicht übertragene Bild vorherzusagen. Je besser diese Vorhersage ist, desto kleiner ist die Datenrate, die zur Übertragung des neuen Bildes erforderlich ist, bzw. mit desto besserer Bildqualität kann das neue Bild bei vorgegebener Datenrate übertragen werden.

Ein weiterer Anwendungsfall der Bewegungsvektorfelder ist die Rekonstruktion fehlender Bilder aus einer Bildsequenz, die zum Zwecke der Datenkompression zeitlich unterabgetastet wurde. Das bedeutet, daß z. B. nur jedes dritte Bild der Sequenz verfügbar ist und die beiden fehlenden Bilder zwischen je zwei vorhandenen Bildern (den "Stützstellenbildern") möglichst "bewegungsrichtig" zu interpolieren sind, so daß in der rekonstruierten Szene die Bewegungen von Objekten so gleichmäßig wie im Original ablaufen. Hierfür sind Bewegungsvektorfelder erforderlich, die für jeden Bildpunkt eines zu interpolierenden Blldes angeben, welcher Bildpunkt bzw. welche Blldpunkte in den beiden zugehörigen Stützstellenbildern für die Rekonstruktion des betreffenden Bildpunktes zu verwenden sind.

In jedem Falle ist in den Bewegungsvektorfeldern jedem Bildpunkt eines Bildes oder auch je einer Gruppe von benachbarten Bildpunkten ein Bewegungsvektor zugeordnet, der die lokale Bewegung durch zwei Komponenten, nämlich den horizontalen und den vertikalen Bewegungsanteil, beschreibt.

Ein Problem bei der Ermittlung solcher Bewegungsvektorfelder besteht darin, daß die in einer Bildsequenz vorhandenen Bewegungen in der Regel vom Ort der Bildpunkte abhängig sind, so daß bereits in einem kleinen Bildausschnitt mehrere verschiedene Bewegungsvektoren vorkommen können, und zwar insbesondere an den Rändern bewegter Objekte. Daher darf für die Ermittlung eines Bewegungsvektors für einen bestimmten Bildpunkt eigentlich nur dieser Bildpunkt selbst betrachtet werden. Andererseits ist aus einem einzelnen Bildpunkt ein Bewegungsvektor schon deshalb nicht ermittelbar, weil der Bewegungsvektor zwei Komponenten beinhaltet und jeder einzelne Bildpunkt nur eine Gleichung für diese zwei Unbekannten definiert, vergl. z. B. B.K.P. Horn, B.G. Schunck: "Determining optical flow", Artificial Intelligence 17, pp. 185-203, 1981. Aber auch in einer kleinen Umgebung um den Bildpunkt herum ist der Bildinhalt häufig noch so wenig strukturiert, daß die Bewegung am Ort des betreffenden Bildpunkts nicht eindeutig feststellbar ist. Daraus ergibt sich die Schwierigkeit, daß einerseits in Gebieten mit stark vom Ort anhängigen Bewegungsvektoren nur kleine Umgebungen zur Berechnung eines Bewegungsvektors zu verwenden sind, andererseits in Gebieten mit nicht deutlich strukturierten Bildinhalten große Umgebungen benötigt werden, um eindeutig die Bewegung erkennen zu können. Es ist daher notwendig, die Größe der jeweiligen Umgebung zu variieren, und es muß außerdem auch Vorwissen, nämlich z. B. die Annahme einer bestimmten Glattheit des Bewegungsvektorfeldes, ausgenutzt werden, um auch bei verrauschten Bildern und in wenig differenzierten Bildausschnitten Bewegungsvektoren zu erhalten, die für die obigen Anwendungsfälle brauchbar sind.

Es sind bisher im wesentlichen drei verschiedene Ansätze zur Bewegungsvektorschätzung untersucht worden, vergl. z. B. H.G. Musmann, P. Pirsch, H.-J. Grallert: "Advances in Picture Coding", Proc. IEEE 73 (1985) 4, pp. 523-548, und zwar

1) Block-Matching-Verfahren,
2) Differentielle Verfahren,
3) Verfahren, die mit markanten Punkten arbeiten.

Die Arbeitsweise dieser Verfahren wird im folgenden für den Fall, daß für ein Bild (z. B. Bild B) einer Bildsequenz die Verschiebung der Bildinhalte gegenüber dem Vorläuferbild (Bild A) bestimmt werden soll, kurz erläutert.

Zu 1):

In Block-Matching-Verfahren wird das Bild, für das Bewegungsvektoren bestimmt werden sollen, in quadratische oder rechteckige Blöcke konstanter Größe, d. h. mit vorgegebener Anzahl von Bildpunkten (häufig 16x16 oder 8x8) unterteilt, vergl. z. B. C.M. Lin, S.C. Kwatra: "Motion compensated interframe color image coding", Proc. Int. Conf. on Communications, 1984, vol. 1, pp. 516-520 und H. Brusewitz, P. Weiss: "A videoconference system at 384 kbit/s". Picture Coding Symposium, Tokyo, Abstracts p. 212, 1986. Für alle Bildpunkte in einem Block wird der gleiche Bewegungsvektor bestimmt, und zwar entsprechend der Annahme, daß näherungsweise die Bewegung in dem kleinen Bildausschnitt, der einem Block entspricht, konstant ist.

Hierbei wird der Bewegungsvektor für einen BLock in Bild B dadurch bestimmt, daß für eine Vielzahl von möglichen Bewegungsvektoren in einem vorgegebenen Wertbereich jeweils derjenige Block in Bild A herausgegriffen wird, der die um den Bewegungsvektor verschobenen Bildpunkte aus Bild A enthält, und daß aus der Vielzahl dieser Blöcke derjenige ausgewählt wird, der zu dem gegebenen Block in Bild B den geringsten Unterschied aufweist. Der Unterschied zweier Blöcke in Bild A und B wird dabei durch ein geeignetes Abstandsmaß, nämlich z. B. die Summe der Quadrate (L2-Norm) oder die Summe der Beträge (L1-Norm) der Bildpunktdifferenzen, ausgedrückt. Derjenige Bewegungsvektor, bei dem die beiden Blöcke aus Bild A und Bild B den geringsten Abstand aufweisen, wird in das gesuchte Bewegungsvektorfeld übernommen.

Das Problem hierbei besteht - wie eingangs ausgeführt - in der Wahl der passenden Blockgröße: Bei zu großen Blöcken wird das Bewegungsvektorfeld zu grob und ungenau, weil die Annahme konstanter Bewegung in den einzelnen Blöcken nicht mehr stimmt; bei zu kleinen Blöcken ist häufig der Bildinhalt zu undifferenziert, um die richtige Objektbewegung erkennen zu lassen. In der Veröffentlichung G. Kummerfeldt, F. May, W. Wolf: "Coding television signals at 320 and 64 kbit/s", Image Coding, M. Kunt, T.S. Huang (Herausgeber), Proc. SPIE 594, pp. 119-128, 1985 wird der Versuch gemacht, durch nachträgliches Zusammenfassen und Glätten der Bewegungsvektoren mehrerer Blöcke, die als zu einem Objekt gehörig klassifiziert werden, das Problem der falsch geschätzten Vektoren in Blöcken mit ambivalentem Bildinhalt zu lösen. Die Ergebnisse zeigen jedoch, daß dieser Ansatz nur bei sehr einfach zu beschreibenden Gesamtbewegungen des Bildinhalts, wie "Kamerazoom: ohne zusätzliche Objektbewegungen, eine Verbesserung des Bewegungsvektorfeldes - in diesem Fall für den Einsatz in der bewegungsadaptiven Prädiktion in der Bilddatenkompression - bewirkt.

zu 2):

Bei den differentiellen Verfahren, vergl. z. B. P. Robert, C. Cafforio, F. Rocca: "Time/space recursions for differential motion estimation, " Image Coding, M. Kunt, T.S. Huang (Herausgeber), Proc. SPIE 594, pp. 175-185, 1986, wird die Annahme einer konstanten Bewegung für einen Block benachbarter Bildpunkte fallengelassen und stattdessen für jeden Bildpunkt ein eigener Bewegungsvektor ermittelt. Zu diesem Zweck werden für jeden Bildpunkt bestimmte Modellparameter berechnet, die den lokalen Verlauf des Bildsignals in der Umgebung des Bildpunktes beschreiben, und aus diesen Parametern sowie aus der Differenz der Bildinhalte von Bild A und B am Ort des betrachteten Bildpunkts wird auf die zugrundeliegende Bewegung, d. h. die Verschiebung der Bildinhalte gegeneinander, geschlossen. Da in der Regel diese Schätzung der Bewegung zunächst nur eine Näherungslösung ist, wird die Prozedur iterativ fortgesetzt, solange bis sich keine weitere Verbesserung des Bewegungsvektors mehr ergibt.

Ein Problem bei diesem Verfahren besteht darin, daß die Beschreibung des Bildinhalts mittels Modellparametern nur in engen Grenzen gültig ist und z. B. bei großen Verschiebungen zwischen BIld A und Bild B versagt. Weiterhin wird zur Berechnung der Modellparameter für einen Bildpunkt die Umgebung des Bildpunkts mit herangezogen, wobei wiederum die Gleichförmigkeit der Bewegung in dieser Umgebung vorausgesetzt wird, so daß die Wahl der Größe dieser Umgebung die gleichen Probleme aufwirft wie die Wahl der Blockgröße in Block-Matching-Verfahren. Dadurch, daß sich die Umgebungen der Bildpunkte gegenseitig überlappen, ergeben sich Vektorfelder, die sich von einem Bildpunkt zum nächsten nur wenig ändern und daher Sprünge in der Bewegung, wie sie an Objektgrenzen auftreten, nicht richtig wiedergeben.

In der Veröffentlichung B.K.P. Horn, B.G. Schunck: "Determining optical flow", Artificial Intelligence 17, pp. 185-203, 1981, wird die Frage diskutiert, wie bei diesen differentiellen Verfahren dafür gesorgt werden kann, daß auch in homogenen Bildbereichen, die keine eindeutige Bewegungserkennung zulassen, sinnvolle, der Realität weitgehend entsprechende Bewegungsvektorfelder ermittelt werden können. Es wird vorgeschlagen, in die zu minimierende Zielfunktion einen Term mit aufzunehmen, der die Unglattheit des entstehenden Bewegungsvektorfeldes ausdrückt. Wegen der Gestaltung dieses die Unglattheit des Bewegungsvektorfeldes messenden Anteils der Zielfunktion - es wird die quadratische Norm der sog. "Laplacian" des Vektorfeldes gemessen, vor allem weil dieses eine analytische, mathematisch einfach handhabbare Funktion ergibt - entstehen Probleme des Verfahrens an Objektgrenzen: Sprünge im Bewegungsvektorfeld werden fälschlicherweise unterdrückt.

Zu 3):

In der dritten Art von Verfahren wird versucht, das Problem, daß die tatsächliche Objektbewegung aus dem lokalen Bildinhalt oft nicht eindeutig erkennbar ist, dadurch zu umgehen, daß zunächst markante Punkte ("Grauwertecken") oder auch Linien (Helligkeitskanten) im Bild gesucht werden und nur für diese Punkte oder längs der Linien ein Bewegungsvektor ermittelt wird, vergl. z. B. R. Lenz: "Estimation of 2-D general motion parameters in TV scenes", Proc. 7th Int. Conf. Pattern Rec., Montreal, Canada, July 30-Aug.2, 1984. Vol. 1, pp. 546-548 und C.J. Radford: "Optical flow fields in Houch transform space", Pattern Recognition Letters 4, pp. 293-303, 1986. Dann muß für den Rest der Bildpunkte das Bewegungsvektorfeld mit geeigneten Mitteln aus den gegebenen Bewegungsvektoren interpoliert werden. Problematisch hierbei sind das zuverlässige Auffinden der markanten Punkte bzw. Linien, für welche zunächst die Bewegungsvektoren ermittelt werden, und die Segmentierung des Bildes in Gebiete mit gleichförmiger Bewegung, welche aus den gegebenen Vektoren der markanten Punkte bzw. Linien durch Interpolation ermittelt werden kann. Wegen der Schwierigkeit dieser Teilaufgaben eignen sich diese Verfahren praktisch nur für Bildsequenzen mit starren Körpern, wie z. B. Fahrzeugen, jedoch nicht für Verarbeitung von Szenen mit sich bewegenden Personen, wie sie häufig in der Bilddatenkompression vorkommen.

Auch für diese Verfahren sind Glättungsoperatoren entwickelt worden, vergl. z. B. H.-H Nagel, W. Enkelmann: "An investigation of smoothness constraints for the estimation of displacement vector fields from image sequences". IEEE Trans. PAMI-8/5, pp. 565-593, Sept. 1986, und zwar wiederum basierend auf der quadratischen Norm einer aus dem Bewegungsvektorfeld angeleiteten Unglattheits-Funktion. Da hierbei die bekannten Probleme an Objektgrenzen entstehen, wurde in dieser Arbeit vorgeschlagen, eine "gerichtete Glattheirsforderung" aufzustellen, die eine Glättung des Bewegungsvektorfeldes nur senkrecht zum Gradienten des Helligverlaufs in dem betreffenden Bild bewirken soll. Das hieraus entstehende Verfahren ist allerdings sehr aufwendig.

Der vorliegenden Erfindung liegt die Aufgabe zugrunde, ein neuartiges Verfahren der eingangs genannten Art zu schaffen, mittels dessen Bewegungsvektorfelder aus einer gegebenen Bildsequenz bestimmt werden können, wobei durch besondere Maßnahmen dafür gesorgt wird, daß die Bewegungsvektorfelder möglichst die tatsächlich im Bild vorhandene Bewegung wiedergeben.

Die Aufgabe wird durch ein Verfahren zur Ermittlung von Bewegungsvektorfeldern aus digitalen Bildsequenzen, das aus jeweils zwei aufeinanderfolgenden Bildern ein Bewegungsvektorfeld ermittelt, welches jedem Bildpunkt des einen Bildes einen Bildpunkt des anderen Bildes zuordnet, wobei die Zuordnung jeweils durch einen Bewegungsvektor definiert ist, welcher die relative Verschiebung der Bildpunkte gegeneinander wiedergibt, und wobei jeweils alle Bildpunkte in einem quadratischen oder rechteckigen Block von Bildpunkten den gleichen Bewegungsvektor erhalten, gelöst, das erfindungsgemäß dadurch gekennzeichnet ist, daß die Ermittlung der Bewegungsvektoren durch Minimierung einer zusammengesetzten Zielfunktion durchgeführt wird, welche zum einen die Differenzen der Luminanzwerte der einander zugeordneten Bildpunkte der beiden gegebenen Bilder berücksichtigt, zum anderen die Differenzen zwischen Bewegungsvektoren, deren Koordinaten benachbart sind, nämlich sog. Nachbar-Bewegungsvektoren, mit Hilfe eines Glattheitsmaßes bewertet, und daß die Minimierung dieser Zielfunktion in der Weise durchgeführt wird, daß zunächst die die Zielfunktion minimierenden Bewegungsvektoren unter der Einschränkung ermittelt werden, daß die Bewegungsvektoren in größeren als den endgültig angestrebten Blöcken konstant sind, und daß anschließend jeder dieser Blöcke in kleinere, vorzugsweise gleichgroße Blöcke unterteilt wird, bis die angestrebte Blockgröße erreicht ist, wobei nach jeder Verkleinerung der Blöcke wiederum die Zielfunktion durch Variation der Bewegungsvektoren minimiert wird.

Das erfindungsgemäße Verfahren geht von dem weiter oben erläuterten Prinzip des Block-Matchine aus, vergl. H.G. Musmann et al, wie zuvor angegeben, d. h. es wird jeweils für einen Block von Bildpunkten ein Bewegungsvektor durch Auswertung einer Zielfunktion für verschiedene mögliche Vektoren und Suche nach demjenigen Bewegungsvektor, der das Optimum der Zielfunktion liefert, ermittelt.

Vorteilhafte Weiterbildungen der Erfindung sind durch die in den Unteransprüchen angegebenen Merkmale gekennzeichnet.

Zur Überwindung der weiter oben erläuterten Probleme sind gemäß der Erfindung die folgenden neuen Prinzipien in das Bewegungsvektor-Ermittlungsverfahren aufgenommen worden:

1) Um ein Bewegungsvektorfeld mit hoher Auflösung zu erhalten, das auch an Objektgrenzen die tatsächliche Bewegung mit hoher Genauigkeit beschreibt, wird das Bild in kleine Blöcke von z. B. 4*4 Bildpunkten (Pixel) unterteilt, für die jeweils ein Bewegungsvektor ermittelt wird. Jedoch wird zum Zwecke der Überwindung der Nachteile der kleinen Blöcke (möglicherweise ambivalenter, nicht genügend charakteristischer Bildinhalt) zunächst in einem ersten Schritt des Verfahrens eine Bewegungsvektor-Ermittlung für erheblich größere Blöcke (z. B. 16*16 oder 32*32 Bildpunkte) durchgeführt. Diese großen Blöcke werden in weiteren Schritten des Verfahrens in kleinere Blöcke unterteilt, wofür jeweils ein eigener Bewegungsvektor ermittelt wird, wobei die Bewegungsvektoren der großen Blöcke als Ausgangspunkt und Hilfsmittel dienen. (ABNEHMENDE BLOCKGRÖSSE).

2) Anstelle der üblichen Zielfunktionen von Block-Matching-Verfahren, die nur die Differenzen der Bildpunktwerte der aufeinanderfolgenden Bilder zum Ausdruck bringen, werden in dem erfindungsgemäßen Verfahren Zielfunktionen verwendet, die durch geeignete ZUSATZTERME auch die "GLATTHEIT" des Bewegungsvektorfeldes berücksichtigen. Insbesondere wird im ersten Schritt des Verfahrens bei der Initialisierung des Bewegungsvektorfeldes mit großer Blockgröße zunächst die Länge der einzelnen Bewegungsvektoren mit in die minimierende Zielfunktion einbezogen. In den Folgeschritten des Verfahrens werden dann die Unterschiede "benachbarter" Bewegungsvektoren, d. h. der Bewegungsvektoren benachbarter Blöcke, in die Zielfunktion mit hineingenommen. Durch diese Art der Zielfunktion kann eine Glättung des Bewegungsvektorfeldes und eine Unterdrückung von Ermittlungsfehlern, die als "Ausreißer" hervortreten, bewirkt werden, und zwar auch bei der Ermittlung der Bewegung von Objekten, die ihre Form ändern können, wie z. B. Personen.

3)Die bei anderen Verfahren (differentiellen sowie mit markanten Punkten arbeitenden Verfahren) im Zusammenhang mit Glattheitsmaßen auftauchenden Probleme an Objektkanten, wo Sprünge im Bewegungsvektorfeld möglich sein müssen, werden in dem erfindungsgemäßen Block-Matching-Verfahren dadurch vermieden, daß das Glattheitsmaß, welches die Unterschiede benachbarter Bewegungsvektoren mißt, nicht auf der quadratischen Norm, sondern auf der BETRAGSNORM der Differenzen beruht. Der Effekt ist ähnlich einer MEDIAN-Filterung des Bewegungsvektorfeldes, bei der auch ausgeprägte Sprünge im Bewegungsvektorfeld erhalten bleiben und nur sog. "Ausreißer" unterdrückt werden. Dieses Glattheitsmaß ermöglicht daher auch das korrekte Ermitteln von Bewegungsvektorfeldern an Objektkanten.

4) Speziell in der Bildcodierung zum Zwecke der Bilddatenkompression kann das Verfahren in der Weise angewendet werden, daß sendseitig zunächst nur mit größeren Blöcken gearbeitet wird und die zugehörigen Bewegungsvektoren zum Empfänger übertragen werden. Diese Bewegungsvektoren werden zur bewegungskompensierenden Prädiktion von Bildern im Sender (Coder) und Empfänger (Decoder) verwendet. Zusätzlich werden auf der Empfängerseite mit Hilfe der empfangenen BIlder iterativ die noch fehlenden Verfeinerungschritte für das Bewegungsvektorfeld durchgeführt, bis die gewünschte kleinste Blockgröße erreicht ist. DIeses Bewegungsvektorfeld kann dann dazu verwendet werden, fehlende BIlder der Bildsequenz, die beim Sender zwecks Datenreduktion übersprungen wurden, bewegungsrichtig zu INTERPOLIEREN.

Im folgenden wird die Erfindung anhand mehrerer Figuren im einzelnen beschrieben.

Fig. 1    zeigt eine schematische Darstellung des Ablaufs des Bewegungsvektor-Ermittlungsverfahrens für eine endgültige Blockgröße 4*4 und eine Startblockgröße 16*16.

Fig. 2    zeigt eine schematische Darstellung der Art und Weise einer durchzuführenden Blockunterteilung.

Fig. 3    zeigt die Darstellung eines Bewegungsvektors X16(m,n) mit den Bewegungsvektoren der vier Nachbarblöcke.

Fig. 4    zeigt ein Flußdiagramm für den Gesamtablauf des Verfahrens.

Fig. 5    zeigt ein erstes Unter-Flußdiagramm, das den Ablauf der Initialisierung des Verfahrens verdeutlicht.

Fig. 6    zeigt ein zweites Unter-Flußdiagramm, das den Ablauf der Iterationsschritte innerhalb des Verfahrens verdeutlicht.

Fig. 7    zeigt ein drittes Unter-Flußdiagramm, das den Ablauf eines Optimierungsvorgangs innerhalb des Verfahrens verdeutlicht.

Fig. 8    zeigt eine blockschaltbildartige Darstellung des Bewegungsvektor-Ermittlungsverfahrens.

Fig. 9    zeigt ein Blockschaltbild betreffend eine Bildsequenzen-Übertragungsanordnung, die Einrichtungen zur Durchführung des erfindungsgemäßen Verfahrens enthält.

Das Verfahren wird im folgenden anhand eines bevorzugten Ausführungsbeispiels für den Fall beschrieben, bei dem aus zwei Bildern - Bild A und Bild B - ein Bewegungsvektorfeld ermittelt wird, wobei jeweils für Blöcke von 4*4 Bildpunkten (Pixel) ein uniformes Bewegungsvektorfeld definiert wird. Das Verfahren beginnt zunächst mit größeren Blöcken, die mehrere kleine Blöcke beinhalten. In dem vorliegenden Beispiel wird mit Blöcken der Größe 16*16 begonnen.

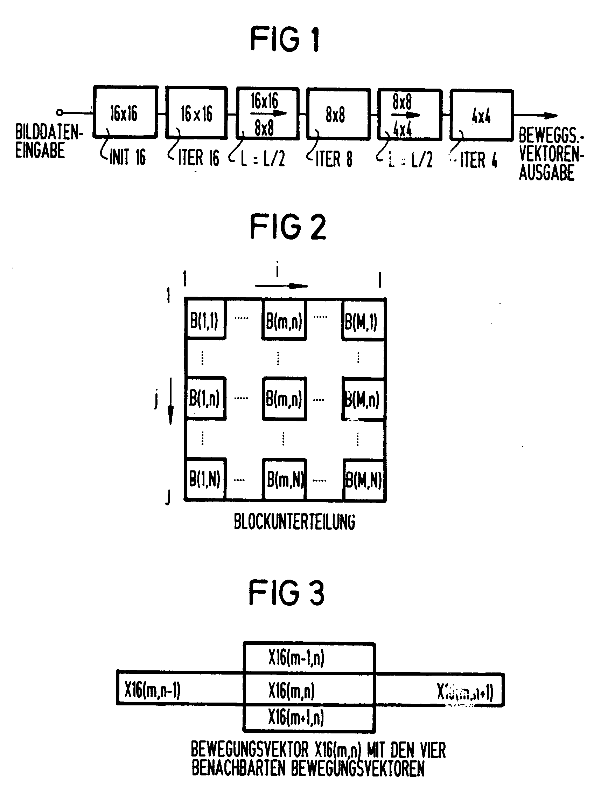

Der gesamte Verfahrensablauf folgt dann einem Schema, wie es in Fig. 1 dargestellt ist.

Die Verfahrensschritte werden im folgenden beschrieben.

Block-Matching 16*16 (INIT16)

Gegeben sind die zwei aufeinanderfolgenden BIlder A und B einer Sequenz, die aus Bildpunkten

$$a(k,h), \ k = 1...I, \ h = 1...J \qquad (1.1a)$$

und

$$b(i,j), \ i = 1...I, \ j = 1...J \qquad (1.1b)$$

bestehen, wobei i bzw. k der Zeilenindex, j bzw. h der Spaltenindex ist.

Ziel des gesamten Verfahrens ist die Ermittlung eines Bewegungsvektorfeldes $X(i,j)$, $i = 1...I$, $j = 1...J$. (1.1c)

Das Bild B wird nun in Blöcke

$$B(m,n), \ \text{mit} \ m = 1...M, \ n = 1...N \qquad (1.2)$$

unterteilt, die jeweils 16*16 Bildpunkte b(i,j) enthalten, vergl. Fig. 2.

Zu jedem Block B(m,n) wird nun ein vorläufiger, als Hilfsmittel dienender Bewegungsvektor

$$X16(m,n) = [x16(m,n), y16(m,n)] \qquad (1.3)$$

ermittelt, der aus zwei Komponenten, nämlich der horizontalen Verschiebung x16(m,n) und der vertikalen Verschiebung y16(m,n), besteht.

Durch diesen Bewegungsvektor X16(m,n) wird jedem Bildpunkt b(i,j) im Block B(m,n) ein Bildpunkt a-(k,h) aus Bild A zugeordnet, und zwar durch die Verknüpfung

$$k = i + x16(m,n) \qquad (1.4a)$$

und

$$h = j + y16(m,n), \qquad (1.4b)$$

d. h. die Koordinaten [k,h] des Bildpunkts a(k,h), der dem Bildpunkt b(i,j) zugeordnet wird, ergeben sich durch Addition des Verschiebungs- oder Bewegungsvektors X16(m,n) zu den Koordinaten [i,j].

Zur Berechnung von X16(m,n) wird für jeden Bildpunkt (Pixel) b(i,j) im Block B(m,n) und für jeden in Betracht kommenden Bewegungsvektor [r,s] die "Displaced Frame Difference" d(i,j,r,s) definiert:

$$d(i,j,r,s) = b(i,j) - a(i+r, j+s), \qquad (1.5)$$

d. h. die Differenz zu dem entsprechenden, um einen Bewegungsvektor [r,s] verschobenen Bildpunkt aus dem Bild A.

Sodann werden die Absolutbeträge der Differenzen d(i,j,r,s) innerhalb des Blocks B(m,n) aufsummiert, wodurch sich die L1-Norm (Betragsnorm) D16(m,n,r,s) der "Displaced Frame Difference" für den Block B-(m,n) und den Bewegungsvektor [r,s] ergibt:

```
D16(m,n,r,s) =  S U M M E  abs  (d(i,j,r,s)).     (1.6)
              i,j in B(m,n)
```

Zu dieser Summe D(m,n,r,s) wird nun noch - als eine erste Maßnahme zur Glättung der Bewegungsvektorfelder - ein "Straf-Term" (Penalty) P16(r,s) hinzuaddiert, der die Länge des Bewegungsvektors [r,s] bewertet:

D16'(m,n,r,s) = D16(m,n,r,s) + P16(r,s)     (1.7a)

wobei

P16(r,s) = 256 * $\beta$ * (abs(r) + abs(s))     (1.7b)

ist.

Der "Straf-Term" besteht also aus der L1-Norm des Bewegungsvektors, multipliziert mit einem Steuerparameter $\beta$ und mit der Anzahl Bildpunkte in einem Block, nämlich 256. Mit dem Parameter $\beta$ kann bestimmt werden, wie stark die Länge des Bewegungsvektors in die Zielfunktion D16'(m,n,r,s) eingeht. (Ein typischer Wert für $\beta$, der sich in Simulationsexperimenten bewährt hat, ist $\beta$ = 1,0).

Sodann wird das Minimum von D16'(m,n,r,s) durch Variation von sich der gesuchte Bewegungsvektor X16(m,n) = [x16(m,n),y16(m,n)] ergibt:

$$
\mathrm{D16'(m,n,x16(m,n),y16(m,n))} = \min_{r,s \text{ in } S} \mathrm{D16'(m,n,r,s)} \quad (1.8)
$$

Üblicherweise wird für S ein quadratischer Wertbereich gewählt, z. B. die Menge aller Bewegungsvektoren [r,s], bei welchen der maximale Betrag der beiden Komponenten r und s eine obere Grenze nicht überschreitet.

Durch die Addition des "Straf-Terms", der ein modifiziertes Glattheitsmaß darstellt, zu D(m,n,r,s) wird erreicht, daß in homogenen Bildbereichen oder an gerade verlaufenden Kanten, wo die Bewegung nicht eindeutig aus dem lokalen Bildinhalt bestimmt werden kann (kein deutliches Minimum von D(m,n,r,s), kurze Bewegungsvektoren bevorzugt werden. Somit wird bereits die Wahrscheinlichkeit für das Auftreten von "Ausreißern" im Bewegungsvektorfeld reduziert.

Für $\beta$ = 1,0 muß z. B. ein Bewegungsvektor [r,s] = [0,1] eine im Durchschnitt um mindestens 1,0 geringere "Displaced Frame Difference" d(i,j,r,s) ergeben, damit er dem Nullvektor [r,s] = [0,0] vorgezogen wird. Entsprechendes gilt für größere Bewegungsvektoren.

Da eine vollständige Suche (Full Search) in der Regel zu zeitaufwendig ist, wird der Wertbereich S am besten zunächst auf eine Anzahl Stichprobenwerte [r,s] in einem festen Raster (z. B. Gitterkonstante 4) beschränkt und anschließend in der Umgebung des Optimums weitergesucht ("Three Step Search", vergl. z. B. H.G. Musmann, P. Pirsch, H.-J. Grallert: "Advances in Picture Coding", Proc. IEEE 73 (1985) 4, pp. 523-548. In diesem Fall kann die Treffsicherheit des Verfahrens dadurch erhöht werden, daß die Suche nach dem optimalen Bewegungsvektor teilweise in tiefpaßgefilterten Bildern durchgeführt wird. Hiermit kann wiederum eine Unterabtastung des Bildes zur Aufwandsreduktion verknüpft werden.

Dieser erste Schritt des Bewegungsvektor-Ermittlungsverfahrens stellt also ein bekanntes Block-Matching-Verfahren dar, welches jedoch durch Einführung des "Straf-Terms" P16(r,s) nach Gl. 1.7a,b zum Zwecke der Glättung der Bewegungsvektorfelder modifiziert wurde.

Iterative Verbesserung des Bewegungsvektorfeldes bei Blockgröße 16 durch Relaxation (ITER 16)

Nach der Bestimmung der vorläufigen Bewegungsvektoren X16(m,n) für alle Blöcke B(m,n), wie zuvor beschrieben, erfolgt eine iterative Verbesserung dieses Bewegungsvektorfeldes (Relaxation). Dazu wird nun ein neuer "Straf-Term" bzw. ein neues Glattheitsmaß P16$'$(m,n,r,s) definiert, mit dessen Hilfe die Abweichung der Bewegungsvektoren X16(m,n) von ihren jeweiligen vier Nachbar-Bewegungsvektoren X16(m-1,n), X16(m+1,n), X16(m,n-1) und X16(m,n+1) gemessen wird, vergl. Fig. 3.

Das Glattheitsmaß P16$'$(m,n,r,s) ist definiert durch:

P16$'$(m,n,r,s) = abs (r - x16(m-1,n)) + abs (s - y16(m-1,n)) +
 + abs (r - x16(m+1,n)) + abs (s - y16(m+1,n)) +
 + abs (r - x16(m,n-1)) + abs (s - y16(m,n-1)) +
 + abs (r - x16(m,n+1)) + abs (s - y16(m,n+1)) *
 * $\alpha$ * 16     (2.1)

Hierbei sind r und s die Komponenten eines Bewegungsvektors [r,s], der als neuer Bewegungsvektor X16-

(m,n) für den Block B(m,n) eingesetzt werden soll.

Das Glattheitsmaß P16$'$(m,n,r,s) stellt also die Summe der Betragsnormen (L1-Normen) der vier Differenzvektoren zwischen X16(m,n) und seinen Nachbarn dar, multipliziert mit einem Steuerparameter "α" und der Kantenlänge eines Blocks, nämlich 16. Mit dem Steuerparameter "α" kann der Grad der Glattheit des Bewegungsvektorfeldes in dem Relaxations-Schritt kontrolliert werden. Die L1-Norm wurde gewählt, da hiermit Kanten im Bewegungsvektorfeld, wie sie an Objekträndern vorkommen, erhalten bleiben, im Gegensatz zur "quadritischen Norm" (L2-Norm), die kontinuierliche Übergänge bevorzugt.

Aus dem Glattheitsmaß P16$'$(m,n,r,s) und der "Displaced Frame Difference" D16(m,n,r,s) (Gl. 1.6) wird eine neue Zielfunktion D16$''$(m,n,r,s) gebildet:

$$D16''(m,n,r,s) = D(m,n,r,s) + P16'(m,n,r,s) \qquad (2.2)$$

Eine Glättung des Bewegungsvektorfeldes geschieht nun dadurch, daß zunächst von dem nach G1. 1.8 (ohne Nachbarschaftsbeziehungen) ermittelten Bewegungsvektorfeld ausgegangen wird, und von dieser Vorbelegung ausgehend schrittweise für einen Block nach dem anderen ein neuer, optimaler Bewegungsvektor X16(m,n) bestimmt wird, und zwar mittels

$$X16(m,n) = [x16(m,n),y16(m,n)] \qquad (2.3a)$$

so daß

$$D16''(m,n,x16(m,n),y16(m,n)) = \min D16''(m,n,r,s)$$
$$r,s \text{ in } S(m,n) \qquad (2.3b)$$

Hierbei wird, um den Suchaufwand zu begrenzen (und als weitere Maßnahme zur Glättung der Vektoren), der Wertbereich S(m,n) für jeden Block adaptiv gestaltet, und zwar derart, daß die Suche um so umfangreicher ist, je unterschiedlicher die Bewegungsvektoren X16(m,n)= x16(m,n),y16(m,n) und deren je vier Nachbar-Bewegungsvektoren sind:

$$S(m,n) = [rmin...rmax, smin...smax] \qquad (2.4a)$$

mit

$$rmin = \min (x16(m,n), x16(m\text{-}1,n), x16(m+1,n), x16(m,n\text{-}1), x16(m,n+1))$$
$$rmax = \max (x16(m,n), x16(m\text{-}1,n), x16(m+1,n), x16(m,n\text{-}1), x16(m,n+1))$$
$$smin = \min (y16(m,n), y16(m\text{-}1,n), y16(m+1,n), y16(m,n\text{-}1), y16(m,n+1))$$
$$smax = \max (y16(m,n), y16(m\text{-}1,n), y16(m+1,n), y16(m,n\text{-}1), y16(m,n+1)) \qquad (2.4b)$$

Es werden nur solche Bewegungsvektoren [r,s] untersucht, für die gilt:

$$rmin \leq r \leq rmax \text{ und } smin \leq s \leq smax.$$

In Gebieten mit konstantem Bewegungsvektor auch über die Blockgrenzen hinweg ist rmin = x16(m,n) = rmax und smin = y16(m,n) = smax, so daß der Wertbereich auf einen Punkt zusammenschrumpft und kein Suchaufwand entsteht. Nur beim Vorhandensein von Sprüngen und sonstigen Divergenzen und "Ausreißern" im Bewegungsvektorfeld wird nach einer Verbesserung gesucht.

Nachdem für alle Blöcke B(m,n) einmal nach einer Verbesserung des Vektors X16(m,n) gesucht wurde, muß der Vorgang für alle diejenigen Blöcke B(m,n) nochmals wiederholt werden, für welche sich mindestens einer der vier Nachbar-Bewegungsvektoren X16(m-1,n) usw. im vorhergehenden Durchlauf geändert hat. Daraus ergibt sich ein iterativer Prozeß, der solange fortzusetzen ist, bis sich keiner der Bewegungsvektoren X16(m,n) mehr verbessern läßt, und zwar unter Konstanthaltung der vier Nachbarn.

In der Regel genügen etwa 5 bis 10 Iterationen, und zwar je nach Grad der Bewegung im Bild, wobei zu berücksichtigen ist, daß nur in der ersten Iteration wirklich alle Blöcke überprüft werden müssen und sodann nur noch diejenigen, in deren Nachbarschaft beim letzten Durchlauf noch Änderungen aufgetreten sind.

Die Tatsache, daß dem Glattheitsmaß P16$'$(m,n,r,s) Gl. 2.1) die L1-Norm benachbarter Vektoren und nicht etwa die L2-Norm zugrundeliegt, führt dazu, daß bei diesem Glättungsprozeß Kanten erhalten bleiben,

EP 0 293 644 B1

ähnlich wie bei MEDIAN-Filterung. In der Tat ist je der Medianwert einer Menge von Zahlen dergenige, welcher die Summe der Beträge der Differenzen, also die Summe der L1-Normen, minimiert. Die zuvor beschriebene Glättung durch Minimierung von D16″(m,n,r,s) kann daher auch als verallgemeinerte Medianfilterung der Bewegungsvektoren, die die "Displaced-Frame-Differenzen" berücksichtigt, interpretiert werden.

Es ist nun ein lokales Optimum der Gesamt-Zielfunktion Z erreicht, die sich durch Summation von D16″(m,n,r,s) über alle Blöcke B(m,n) im Bild ergibt, d. h. für Z gilt:

$$Z = Z1 + \alpha\, Z2, \qquad (2.5)$$

wobei

```
 Z1 = SUMME        d(i,j,x(i,j),y(i,j))                    (2.6)
       i,j im Bild
```

mit d(i,j,x(i,j),y(i,j)) entsprechend G1 (1.5), und

```
 Z2 = SUMME          ( |x(i,j)-x(i-1,j)| + |y(i,j)-y(i-1,j)| +
       i,j im Bild    + |x(i,j)-x(i+1,j)| + |y(i,j)-y(i+1,j)| +
                      + |x(i,j)-x(i,j-1)| + |y(i,j)-y(i,j-1)| +
                      + |x(i,j)-x(i,j+1)| + |y(i,j)-y(i,j+1)|).

                                                            (2.7)
```

Hierbei sind die Größen x(i,j) bzw. y(i,j) usw. die Komponenten der Bewegungsvektoren X(i,j), die sich aus dem Bewegungsvektorfeld X16(m,n) dadurch ergeben, daß allen Bildpunkten b(i,j) im Block B(m,n) der gleiche Bewegungsvektor X16(m,n) zugewiesen wird:

X(i,j) = [x(i,j),y(i,j)] = X16(m,n) falls b(i,j) in B(m,n).     (2.8)

Das Bewegungsvektorfeld wird im folgenden dadurch weiter optimiert - d. h. die Zielfunktion Z wird dadurch weiter minimiert - daß die Größe der Blöcke, in denen das Bewegungsvektorfeld als gleichförmig vorausgesetzt wird, halbiert wird.

Blockunterteilung von 16*16 auf 8*8 Bildpunkte (L = L/2)

Aus dem gegebenen Bewegungsvektorfeld [X16(m,n)] für die 16er-Blöcke wird ein neues Feld [X8(p,q)] für 8er-Blöcke B8(p,q) erstellt, das aus den Bewegungsvektoren

X8(p,q) = [x8(p,q),y8(p,q)]     (3.1)

besteht. Dazu werden alle 16er-Blöcke in je vier 8er-Blöcke unterteilt, und jeder der Teilblöcke bekommt zunächst den gleichen Bewegungsvektor, nämlich den des 16er-Blocks, zugewiesen. Dieses neue Bewegungsvektorfeld dient als Vorgabe für den nächsten Relaxationsschritt.

Iterative Verbesserung des Vektorfeldes bei Blockgröße 8 durch Relaxation (ITER 8)

Dieser Verfahrensschritt entspricht genau dem Relaxationsschritt for Blockgröße 16, wie er zuvor beschrieben wurde, jedoch mit der Änderung, daß in den Gleichungen für die Zielfunktion "16" durch "8" zu ersetzen ist. Es wird also eine Zielfunktion D8″(p,q,rs) entsprechend D16″(m,n,r,s) nach Gl. 2.2 minimiert, welche ein Glattheitsmaß P8′(p,q,r,s) wie in Gl. 2.1 enthält. Es kann hier für $\alpha$ (s. Gl. 2.1) der gleiche Wert wie bei Blockgröße 16 verwendet werden.

Blockunterteilung von 8*8 auf 4*4 Bildpunkte (L = L/2)

9

Wie bei der Blockunterteilung von 16*16 auf 8*8 Bildpunkte werden nun die Bewegungsvektoren, die für Blöcke der Größe 8*8 ermittelt wurden, auf je vier Blöcke mit 4*4 Bildpunkten verteilt.

Iterative Verbesserung des Vektorfeldes bei Blockgröße 4 durch Relaxation (ITER 4)

Dieser Verfahrensschritt entspricht genau den Relaxationsschritten für Blockgröße 16 und 8.

Die Verfahrensschritte "Blockunterteilung" und "Relaxation" können bis zur Blockgröße 1*1 Bildpunkt fortgesetzt werden; jedoch ist für viele Anwendungsfälle eine Auflösung des Bewegungsvektorfeldes mit einem Bewegungsvektor je 4*4 Bildpunkten ausreichend.

Allgemeines Blockschaltbild

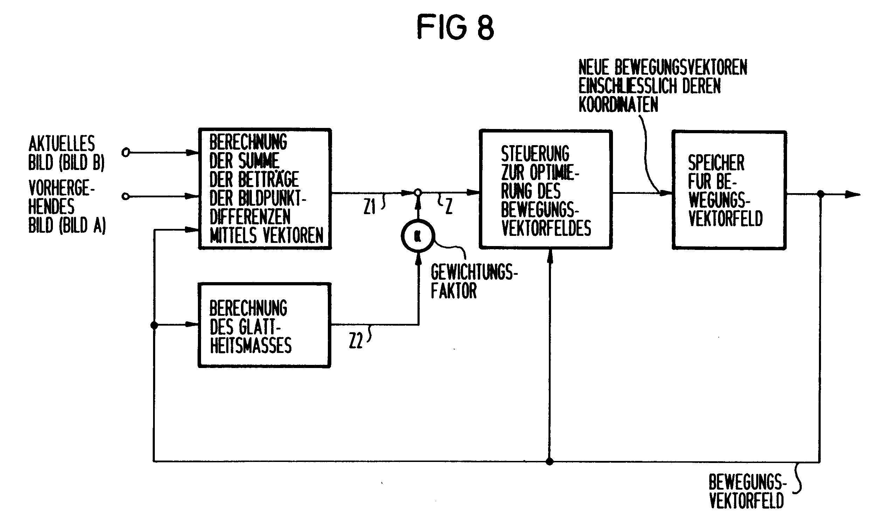

In Fig. 8 ist eine funktionelle Anordnung dargestellt, mit der das zuvor beschriebene Bewegungsvektor-Ermittlungsverfahren im Prinzip durchgeführt werden kann.

Ausgehend von zwei Eingangsbildern A und B wird in einer Abfolge von Variationen des Bewegungsvektorfeldes unter Beachtung der jeweiligen Werte der Zielfunktion Z das endgültige Bewegungsvektorfeld bestimmt.

Bewegungsvektor-Ermittlung für das Einfügen von Zwischenbildern (Bild-Interpolation)

Das zuvor beschriebene Verfahren kann auch zur Ermittlung von Bewegungsvektorfeldern für die Bild-Interpolation eingesetzt werden. Hierzu müssen nur die Größen, die die "Displaced-Frame-Differenzen" messen, nämlich D16 (m,n,r,s) (G1. 1.6) und die entsprechenden Größen für die Blöcke der Größen 8*8 und 4*4, etwas modifiziert werden.

Wenn z. B. zwischen die gegebenen Bilder A und B genau ein Zwischenbild durch bewegungsadaptive Interpolation so eingefügt werden soll, daß bewegte Objekte sich in dem interpolierten Bild gerade um die Hälfte der Verschiebung von Bild A nach Bild B weiterbewegt haben, so ergibt sich anstelle von D16(m,n,r,s) in G1. 1.6 die neue Größe D16i (m,n,r,s), wobei i für Interpolation steht:

```
D16i(m,n,r,s) =  S U M M E    abs    (d'(i,j,r,s))   (7.1)
             i,j in B(m,n)
```

mit

d'(i,j,r,s) = b(i-r/2,j-s/2) - a(i + r/2,j + s/2)     (7.2)

Der Bewegungsvektor [r,s] wird also nun nicht vollständig auf das Bild A angewendet, sondern zur Hälfte auf Bild A und mit umgekehrtem Vorzeichen auf Bild B, so daß insgesamt Bild A und Bild B wieder um den gesamten Bewegungsvektor [r,s] gegeneinander versetzt sind.

Entsprechendes gilt auch für die Interpolation um höhere Faktoren als 2, d. h. falls zwei oder mehr Bilder zwischen die gegebenen Bilder A und B eingefügt werden sollen. Allgemein wird auf Bild A die Verschiebung [r*r,t*s] und auf Bild B die Verschiebung [(t-1)*r,(t-1)*s] angewendet, und zwar mit 0 < t < 1.

Falls die Verschiebung nicht auf ganzzahlige Bildpunkt-Koordinaten führt, ist eine Rundung erforderlich.

Aufteilung der Bewegungsvektor-Ermittlung auf Sender (Coder) und Empfänger (Decoder) für eine Bewegtbildcodierung

In einem Bewegtbild-Codierverfahren wird die Bewegungsvektor-Ermittlung für zwei Zwecke verwendet:
1) Bewegungskompensierende Prädiktion bei Sender und Empfänger
2) Bewegungsadaptive Interpolation fehlender Bilder beim Empfänger.

Hierbei ist sendeseitig eine Bewegungsvektor-Ermittlung notwendig, um die Bewegungsvektoren für die Bewegungskompensierende Prädiktion zu ermitteln. Da diese Bewegungsvektoren übertragen werden müssen, kann man hier das Bewegungsvektorfeld nicht beliebig verfeinern. Diese Bewegungsvektoren können jedoch beim Empfänger zusätzlich zur Prädiktion auch zur bewegungskompensierenden Interpolation eingesetzt werden, wenn zuvor aus dem übertragenen Bewegungsvektorfeld und den empfängerseitig vorhandenen übertragenen Bildern ein verfeinertes Bewegungsvektorfeld gewonnen wird.

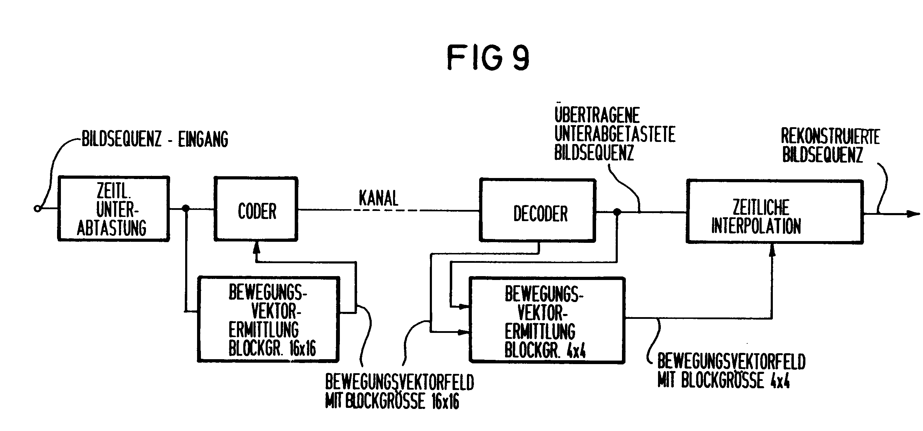

Für die Anwendung in der Bildsequenzencodierung kann daher das zuvor beschriebene mehrstufige Verfahren (s. Fig. 1) in der Weise verwendet werden, daß die Verfahrensschritte "Initialisierung mit Blockgröße 16*16" sowie "Iterationen mit Blockgröße 16" auf der Sendeseite durchgeführt werden und die übrigen Verfahrensschritte ("Blockunterteilung" und "Iterationen" für 8er- und 4er-Blöcke) beim Empfänger, vergl. Fig. 9.

In Simulationsexperimenten hat sich gezeigt, daß sich tatsächlich das sendeseitig für bewegungskompensierende Prädiktion gewonnene Bewegungsvektorfeld als Vorgabe für eine empfängerseitige Verfeinerung zum Zwecke der Interpolation eignet, wobei sendeseitig die "Displaced Frame Difference" $D16(m,n,r,s)$ aus Gl. 1.6 und empfängerseitig die an die Interpolation angepaßte Funktion $D16i(m,n,r,s)$ (Gln. 7.1, 7.2) bzw. deren Entsprechungen für kleinere Blöcke verwendet werden.

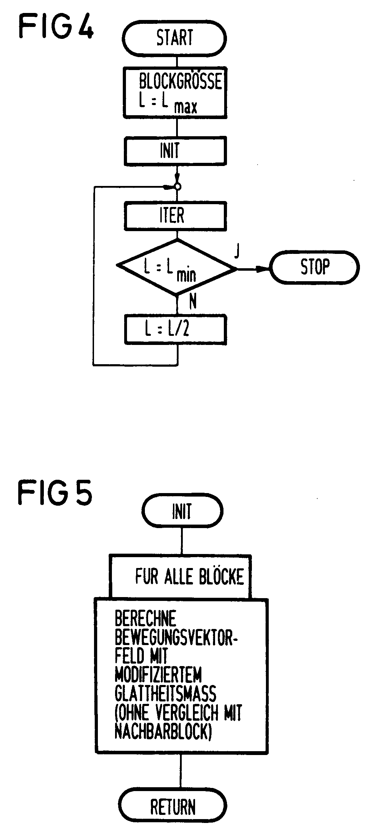

Der Ablauf des zuvor erläuterten Bewegungsvektor-Ermittlungsverfahrens wird durch die in Fig. 4 bis Fig. 7 gezeigten Flußdiagramme verdeutlicht.

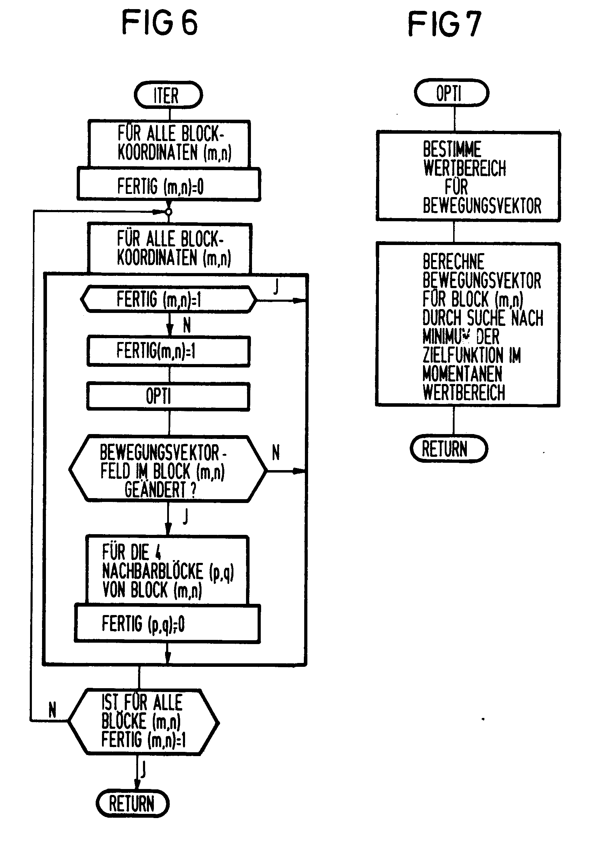

Fig. 4 stellt den Gesamt-Ablaufplan des Verfahrens dar, in dem gezeigt ist, daß zunächst mit der maximalen Blockgröße $L = L_{max}$ eine Initialisierung (INIT) des Vektorfeldes stattfindet und daß daran anschließend für alle Blockgrößen von $L_{max}$ bis $L_{min}$ -wobei jeweils die Blockkantenlänge L halbiert wird - eine iterative Verbesserung (ITER) stattfindet. Der Ablauf der iterativen Verbesserung (ITER) bei gegebener Blockgröße L ist in Fig. 5 gezeigt. Es wird hier für alle Blöcke $B(m,n)$ der Bewegungsvektor ermittelt, der die Zielfunktion mit modifiziertem Glattheitsmaß minimiert.

Die iterative Verbesserung (ITER) folgt dem Ablaufplan gemäß Fig. 6. Es existiert hier ein Protokollierungsfeld $FERTIG(m,n)$, das für jeden Block $B(m,n)$ - mit der jeweiligen Blockgröße L - angibt, ob der Block noch zu bearbeiten ist - d. h.

$FERTIG(m,n)$ = 0 - oder ob er sich bereits in einem lokalen Optimum (d.h. Minimum) der Zielfunktion befindet - d. h. $FERTIG(m,n)$ = 1. Zunächst wird das Feld FERTIG für alle Blöcke auf Null gesetzt. In der darauffolgenden Schleife wird jeweils für alle Blöcke, die noch nicht "FERTIG" sind, das Minimum der Zielfunktion in einem bestimmten Wertebereich gesucht (OPTI), vergl. Fig. 7. Für alle diese Blöcke wird $FERTIG (m,n)$ = 1 gesetzt. Falls sich bei der Minimumsuche der Bewegungsvektor des Blocks verändert hat, wird für die Nachbarblöcke das Feld FERTIG auf Null gesetzt, damit diese nochmals bearbeitet werden. Wenn alle Blöcke den Wert $FERTIG(m,n)$ = 1 haben, ist die Iterationenfolge beendet.

Den Ablauf des Optimierungsschritts (OPTI), der in ITER durchlaufen wird, zeigt. Fig. 7.

Zusammenfassend ist festzustellen, daß das Unterteilen der Blöcke jeweils vorzugsweise durch Halbieren der Kantenlängen der Blöcke durchgeführt wird. Bei einem Einfügen eines Zwischenbildes zwischen die beiden Bilder werden jedem Bildpunkt dieses Zwischenbildes zwei Bildpunkte, nämlich einer aus dem ersten und einer aus dem zweiten Bild, zugeordnet. Die Differenzen der Luminanzwerte einander entsprechender Bildpunkte der beiden aufeinanderfolgenden Bilder innerhalb eines Blocks von Bildpunkten werden mittels der Summe der Absolutbeträge der Differenzen der Luminanzwerte bewertet und als Summanden in der zu minimierenden Zielfunktion verwendet, wobei diese Summanden eine erste Komponente der Zielfunktion bilden. Die Differenzen der Luminanzwerte einander entsprechender Bildpunkte der beiden aufeinanderfolgenden Bilder innerhalb eines Blocks von Bildpunkten können auch mittels der Summe der Quadrate der Differenzen der Luminanzwerte bewertet und als Summanden in der zu minimierenden Zielfunktion verwendet werden, wobei diese Summanden eine erste Komponente der Zielfunktion bilden.

Das erfindungsgemäße Verfahren sieht außerdem vor, daß die Differenzen zwischen Nachbar-Bewegungsvektoren durch die Betragsnormen dieser Differenzen ausdrückt werden, wobei die Summe dieser Betragsnormen eine zweite Komponente der Zielfunktion bildet und als das Glattheitsmaß verwendet wird. Zumindest eine der beiden Komponenten wird mit einem Gewichtungsfaktor multipliziert, und die entsprechenden Produkte bilden durch Summation die Zielfunktion, wobei die Zielfunktion vorzugsweise die Form $Z = Z1 + \alpha\, Z2$ hat, wobei Z1 die erste Komponente, Z2 die zweite Komponente und $\alpha$ der Gewichtungsfaktor sind.

Als Nachbarn jedes Bewegungsvektors werden in dem bevorzugten Ausführungsbeispiel nur diejenigen vier Nachbar-Bewegungsvektoren verwendet, deren Koordinaten sich horizontal und vertikal in Nachbarschaft zu den Koordinaten des betreffenden Bewegungsvektor befinden, d. h., daß sich deren Koordinaten um (0,1), (0,-1), (1,0) oder (-1,0) von den Koordinaten des betreffenden Bewegungsvektors unterscheiden.

Bei der Initialisierung des Bewegungsvektorfeldes mit großen Blöcken - vorzugsweise 16-16 Bildpunkte (Pixel) - nämlich solange noch nicht für jeden Block zumindest schon einmal ein Bewegungsvektor berechnet wurde, wird das Glattheitsmaß dahingehend modifiziert, daß statt der Differenzen zwischen Nachbar-Bewegungsvektoren die Betragsnormen der zu optimierenden Bewegungsvektoren - multipliziert mit einem Gewichtungsfaktor - in der Zielfunktion mittels des Glattheitsmaßes verwendet werden.

In jeder Stufe der Blockunterteilung, d. h. am Anfang bei der maximalen Blockgröße und daraufhin nach jeder Blockunterteilung, die vorzugsweise bis zu einer Blockgröße von 4x4 Bildpunkten (Pixel) durchgeführt wird, wird so lange der Reihe nach jeder einzelne Bewegungsvektor durch Variation in einem betreffenden Wertbereich optimiert, bis für keinen Bewegungsvektor mehr auf diese Weise ein kleinerer Wert der Zielfunktion gefunden werden kann.

Der Wertbereich der Bewegungsvektoren, innerhalb dessen die einzelnen Bewegungsvektoren variiert werden, um die Zielfunktion zu minimieren, wird davon anhängig gemacht, welche Werte die Bewegungsvektoren in dem bereits berechneten Bewegungsvektorfeld haben, so daß der Wertbereich für die Optimierung des Bewegungsvektorfeldes klein ist, wenn Nachbar-Bewegungsvektoren gleich oder ähnlich sind, und nur dann größer ist, wenn Nachbar-Bewegungsvektoren große Differenzen untereinander aufweisen.

Durch ein Protokollierungssystem wird bewirkt, daß nur diejenigen Bewegungsvektoren nochmals im Hinblick auf eine mögliche Verkleinerung des Werts der Zielfunktion optimiert werden, deren Nachbar-Bewegungsvektoren sich seit der letzten Optimierung des betreffenden Bewegungsvektors verändert haben, so daß sich gegebenenfalls auch das Glattheitsmaß verändert hat, wobei das Protokollierungssystem ein Protokollierungsfeld mit einem Speicherplatz je Block zur Speicherung einer Steuerinformation für den Optimierungsablauf enthält.

Bei der Optimierung eines bestimmten Bewegungsvektors braucht nicht unbedingt jeder Bewegungsvektor des betreffenden Wertbereichs, sondern nur eine Teilmenge der Bewegungsvektoren nach einem vorbestimmten Schema in Betracht gezogen zu werden.

Zusätzlich zu der Differenz zwischen Nachbar-Bewegungsvektoren in dem zu berechnenden Bewegungsvektorfeld kann auch die Differenz zwischen den Bewegungsvektoren des aktuellen Bewegungsvektorfeldes und denen des unmittelbar vorher aus einem vorangehenden Paar aufeinanderfolgender Bilder berechneten Bewegungsvektorfeldes ermittelt und in dem Glattheitsmaß verwendet werden, und zwar zum Zwecke der Glättung des Bewegungsvektorfeldes in der Zeitachsenrichtung, d. h. zur Angleichung aufeinanderfolgender Bewegungsvektorfelder.

Das erfindungsgemäße Verfahren kann auch in Fällen angewendet werden, in denen aus je zwei aufeinanderfolgenden, mittels Datenkompression von einem Coder über einen Kanal zu einem Decoder übertragenen Bildern Bewegungsvektorfelder zum Zwecke des Einfügens von Zwischenbildern ermittelt werden, und zwar derart, daß zur Initialisierung des Verfahrens entsprechende Bewegungsvektorfelder verwendet werden, die bereits zuvor übertragen worden sind.

**Patentansprüche**

1. Verfahren zur Ermittlung von Bewegungsvektorfeldern aus digitalen Bildsequenzen, das aus jeweils zwei aufeinanderfolgenden Bildern ein Bewegungsvektorfeld ermittelt, welches jedem Bildpunkt des einen Bildes einen Bildpunkt des anderen Bildes zuordnet, wobei die Zuordnung jeweils durch einen Bewegungsvektor definiert ist, welcher die relative Verschiebung der Bildpunkte gegeneinander wiedergibt, und wobei jeweils alle Bildpunkte in einem quadratischen oder rechteckigen Block von Bildpunkten den gleichen Bewegungsvektor erhalten, dadurch **gekennzeichnet,** daß die Ermittlung der Bewegungsvektoren (X(m,n)) durch Minimierung einer zusammengesetzten Zielfunktion (Z) durchgeführt wird, welche zum einen die Differenzen der Luminanzwerte der einander zugeordneten Bildpunkte der beiden gegebenen Bilder berücksicht und welche zum anderen die Differenzen zwischen Bewegungsvektoren, deren Koordinaten benachbart sind, nämlich sog. Nachbar-Bewegungsvektoren, mit Hilfe eines Glattheitsmaßes (P) bewertet, und daß die Minimierung dieser Zielfunktion in der Weise durchgeführt wird, daß zunächst die die Zielfunktion minimierenden Bewegungsvektoren unter der Einschränkung ermittelt werden, daß die Bewegungsvektoren in größeren als den endgültig angestrebten Blöcken konstant sind, und daß anschließend jeder dieser Blöcke (16x16) in kleinere, vorzugsweise gleichgroße Blöcke unterteilt wird, bis die angestrebte Blockgröße (4x4) erreicht ist, wobei nach jeder Verkleinerung der Blöcke wiederum die Zielfunktion durch Variation der Bewegungsvektoren minimiert wird.

2. Verfahren nach Anspruch 1, dadurch **gekennzeichnet,** daß das Unterteilen der Blöcke jeweils durch Halbieren der Kantenlängen der Blöcke durchgeführt wird.

3. Verfahren nach Anspruch 1, dadurch **gekennzeichnet,** daß bei einem Einfügen eines Zwischenbildes zwischen die beiden Bilder jedem Bildpunkt dieses Zwischenbildes zwei Bildpunkte, nämlich einer aus dem ersten und einer aus dem zweiten Bild, zugeordnet werden.

4. Verfahren nach Anspruch 1, dadurch **gekennzeichnet,** daß die Differenzen der Luminanzwerte einander entsprechender Bildpunkte der beiden aufeinanderfolgenden Bilder innerhalb eines Blocks von Bildpunkten mittels der Summe der Absolutbeträge der Differenzen der Luminzwerte bewertet und als Summanden in der zu minimierenden Zielfunktion verwendet werden, wobei diese Summanden eine erste Komponente der Zielfunktion bilden.

5. Verfahren nach Anspruch 1, dadurch **gekennzeichnet,** daß die Differenzen der Luminanzwerte einander entsprechender Bildpunkte der beiden aufeinanderfolgenden Bilder innerhalb eines Blocks von Bildpunkten mittels der Summe der Quadrate der Differenzen der Luminanzwerte bewertet und als Summanden in der zu minimierenden Zielfunktion verwendet werden, wobei diese Summanden eine erste Komponente der Zielfunktion bilden.

6. Verfahren nach Anspruch 4 oder 5, dadurch **gekennzeichnet,** daß die Differenzen zwischen Nachbar-Bewegungsvektoren durch die Betragsnormen dieser Differenzen ausgedrückt werden, wobei die Summe dieser Betragsnormen eine zweite Komponente der Zielfunktion bildet und als das Glattheitsmaß verwendet wird.

7. Verfahren nach Anspruch 6, dadurch **gekennzeichnet,** daß zumindest eine der beiden Komponenten mit einem Gewichtungsfaktor multipliziert wird und daß die entsprechenden Produkte durch Summation die Zielfunktion bilden, wobei die Zielfunktion vorzugsweise die Form $Z = Z1 + \alpha\, Z2$ hat, wobei Z1 die erste Komponente, Z2 die zweite Komponents and $\alpha$ der Gewichtungsfaktor sind.

8. Verfahren nach Anspruch 6, dadurch **gekennzeichnet,** daß als Nachbarn jedes Bewegungsvektors nur diejenigen vier Nachbar-Bewegungsvektoren verwendet werden, deren Koordinaten sich horizontal und vertikal in Nachbarschaft zu den Koordinaten des betreffenden Bewegungsvektor befinden, d. h., daß sich deren Koordinaten um (0,1), (0,-1), (1,0) oder (-1,0) von den Koordinaten des betreffenden Bewegungsvektors unterscheiden.

9. Verfahren nach Anspruch 6, dadurch **gekennzeichnet,** daß bei der Initialisierung des Bewegungsvektorfeldes mit großen Blöcken - vorzugsweise 16x16 Bildpunkte (Pixel) - nämlich solange noch nicht für jeden Block zumindest schon einmal ein Bewegungsvektor berechnet wurde, das Glattheitsmaß dahingehend modifiziert wird, daß statt der Differenzen zwischen Nachbar-Bewegungsvektoren die Betragsnormen der zu optimierenden Bewegungsvektoren - multipliziert mit einem Gewichtungsfaktor - in der Zielfunktion mittels des Glattheitsmaßes verwendet werden.

10. Verfahren nach Anspruch 2, dadurch **gekennzeichnet,** daß in jeder Stufe der Blockunterteilung, d. h. am Anfang bei der maximalen Blockgröße und daraufhin nach jeder Blockunterteilung, die vorzugsweise bis zu einer Blockgröße von 4x4 Bildpunkten (Pixel) durchgeführt wird, so lange der Reihe nach jeder einzelne Bewegungsvektor durch Variation in einem betreffenden Wertbereich optimiert wird, bis für keinen Bewegungsvektor mehr auf diese Weise ein kleinerer Wert der Zielfunktion gefunden werden kann.

11. Verfahren nach einem der vorhergehenden Ansprüche, dadurch **gekennzeichnet,** daß der Wertbereich der Bewegungsvektoren, innerhalb dessen die einzelnen Bewegungsvektoren variiert werden, um die Zielfunktion zu minimieren, davon abhängig gemacht wird, welche Werte die Bewegungsvektoren in dem bereits berechneten Bewegungsvektorfeld haben, so daß der Wertbereich für die Optimierung des Bewegungsvektorfeldes klein ist, wenn Nachbar-Bewegungsvektoren gleich oder ähnlich sind, und nur dann größer ist, wenn Nachbar-Bewegungsvektoren große Differenzen untereinander aufweisen.

12. Verfahren nach einem der vorhergehenden Ansprüche, dadurch **gekennzeichnet,** daß durch ein Protokollierungssystem bewirkt wird, daß nur diejenigen Bewegungsvektoren nochmals im Hinblick auf eine mögliche Verkleinerung des Werts der Zielfunktion optimiert werden, deren Nachbar-Bewegungsvektoren sich seit der letzten Optimierung des betreffenden Bewegungsvektors verändert haben, so daß sich gegebenenfalls auch das Glattheitsmaß verändert hat, wobei das Protokollierungssystem ein Protokollierungsfeld mit einem Speicherplatz je Block zur Speicherung einer Steuerinformation für den Optimierungsablauf enthält.

13. Verfahren nach Anspruch 10 oder 11, dadurch **gekennzeichnet,** daß bei der Optimierung eines bestimmten Bewegungsvektors nicht jeder Bewegungsvektor des betreffenden Wertbereichs, sondern nur eine Teilmenge der Bewegungsvektoren nach einem vorbestimmten Schema in Betracht gezogen wird.

14. Verfahren nach Anspruch 1 oder 6, dadurch **gekennzeichnet,** daß zusätzlich zu der Differenz zwischen Nachbar-Bewegungsvektoren in dem zu berechnenden Bewegungsvektorfeld auch die Differenz zwischen den Bewegungsvektoren des aktuellen Bewegungsvektorfeldes und denen des unmittelbar vorher aus einem vorangehenden Paar aufeinanderfolgender Bilder berechneten Bewegungsvektorfeldes ermittelt und in dem Glattheitsmaß verwendet wird, und zwar zum Zwecke der Glättung des Bewegungsvektorfeldes in der Zeitachsenrichtung, d. h. zur Angleichung aufeinanderfolgender Bewegungsvektorfelder.

15. Verfahren nach den vorhergehenden Ansprüchen, wobei aus je zwei aufeinanderfolgenden, mittels Datenkompression von einem Coder über einen Kanal zu einem Decoder übertragenen Bildern Bewegungsvektorfelder zum Zwecke des Einfügens von Zwischenbildern ermittelt werden, dadurch **gekennzeichnet,** daß zur Initialisierung des Verfahrens entsprechende Bewegungsvektorfelder verwendet werden, die bereits zuvor übertragen worden sind.

## Claims

1. Method for determining motion vector fields from digital image sequences, which determines from in each case two successive image frames a motion vector field which allocates to each picture element of one image frame a picture element of the other image frame, the allocation in each case being defined by a motion vector which reproduces the relative displacement of the picture elements with respect to one another, and in each case all picture elements in a square or rectangular block of picture elements receiving the same motion vector, characterised in that the motion vectors ($X(m,n)$) are determined by minimising a composite objective function ($Z$) which, on the one hand, takes into consideration the differences in the luminance values of the mutually allocated picture elements of the two given image frames, and which, on the other hand, weights the differences between motion vectors, the coordinates of which are adjacent, namely so-called neighbouring motion vectors, with the aid of a smoothness dimension ($P$), and in that this objective function is minimised in such a manner that first the motion vectors minimising the objective function are determined with the constraint that the motion vectors in larger blocks than those ultimately desired are constant, and in that subsequently each of these blocks (16x16) is subdivided into smaller, preferably equal-sized blocks until the desired block size (4x4) is achieved, the objective function again being minimised by variation of the motion vectors after each reduction in the size of the blocks.

2. Method according to Claim 1, characterised in that the blocks are in each case subdivided by halving the edge lengths of the blocks.

3. Method according to Claim 1, characterised in that during an insertion of an intermediate image frame between the two image frames, two picture elements, namely one from the first image frame and one from the second image frame, are allocated to each picture element of this intermediate image frame.

4. Method according to Claim 1, characterised in that the differences in the luminance values of mutually corresponding picture elements of the two successive image frames within a block of picture elements are weighted by means of the sum of the absolute amounts of the differences in the luminance values and are used as summands in the objective function to be minimised, these summands forming a first component of the objective function.

5. Method according to Claim 1, characterised in that the differences in the luminance values of mutually corresponding picture elements of the two successive image frames within a block of picture elements are weighted by means of the sum of the squares of the differences in the luminance values and are used as summands in the objective function to be minimised, these summands forming a first component of the objective function.

6. Method according to Claim 4 or 5, characterised in that the differences between neighbouring motion vectors are expressed by the norms of these differences, the sum of these norms forming a second component of the objective function and being used as the smoothness dimension.

14

**7.** Method according to Claim 6, characterised in that at least one of the two components is multiplied by a weighting factor and in that the corresponding products form by summation the objective function, the objective function preferably having the form $Z = Z1 + \alpha\, Z2$, Z1 being the first component, Z2 being the second component and $\alpha$ being the weighting factor.

**8.** Method according to Claim 6, characterised in that only those four neighbouring motion vectors are used as neighbours of each motion vector, the coordinates of which are horizontally and vertically in the neighbourhood of the coordinates of the relevant motion vector, that is to say that their coordinates differ from the coordinates of the relevant motion vector by (0,1), (0,-1), (1,0) or (-1,0).

**9.** Method according to Claim 6, characterised in that during the initialisation of the motion vector field with large blocks - preferably 16x16 picture elements (pixels) - namely for as long as a motion vector has not yet been calculated at least once for each block, the smoothness dimension is modified to the extent that, instead of the differences between neighbouring motion vectors, the norms of the motion vectors to be optimised, multiplied by a weighting factor, are used in the objective function by means of the smoothness dimension.

**10.** Method according to Claim 2, characterised in that in each stage of block subdivision, that is to say at the beginning with the maximum block size and following that after each block subdivision, which is preferably carried out down to a block size of 4x4 picture elements (pixels), each individual motion vector is optimised in sequence by variation in a relevant range of values until it is no longer possible to find in this manner a smaller value of the objective function for any motion vector.

**11.** Method according to one of the preceding claims, characterised in that the range of values of the motion vectors, within which the individual motion vectors are varied in order to minimise the objective function, is made dependent on the values of the motion vectors in the motion vector field already calculated, so that the range of values is small for the optimisation of the motion vector field when neighbouring motion vectors are equal or similar and is only greater when neighbouring motion vectors exhibit large differences between one another.

**12.** Method according to one of the preceding claims, characterised in that a logging system has the effect that only those motion vectors are again optimised with respect to a possible reduction in the value of the objective function whose neighbouring motion vectors have changed since the last optimisation of the relevant motion vector, so that the smoothness dimension has possibly also changed, the logging system containing a logging field with one storage location per block for storing control information for the optimisation sequence.

**13.** Method according to Claim 10 or 11, characterised in that during the optimisation of a particular motion vector, not every motion vector of the relevant range of values but only a subset of the motion vectors is taken into consideration in accordance with a predetermined plan.

**14.** Method according to Claim 1 or 6, characterised in that, in addition to the difference between neighbouring motion vectors in the motion vector field to be calculated, the difference between the motion vectors of the current motion vector field and those of the motion vector field calculated immediately before from a preceding pair of successive image frames is also determined and used in the smoothness dimension for the purpose of smoothing the motion vector field in the direction of the time axis, that is to say for matching successive motion vector fields.

**15.** Method according to the preceding claims, in which from each two successive image frames transmitted by means of data compression from a coder via a channel to a decoder, motion vector fields are determined for the purpose of the insertion of intermediate image frames, characterised in that corresponding motion vector fields which have already been transmitted previously are used for initialising the method.

## Revendications

**1.** Procédé pour déterminer des champs de vecteurs de déplacement à partir de séquences d'images numériques, qui détermine, à partir de deux images successives respectives, un champ de vecteurs de déplacement, qui associe à chaque point image d'une image un point image de l'autre image, et selon lequel l'association est définie respectivement par un vecteur de déplacement, qui reproduit le décalage réciproque des points images et selon lequel respectivement tous les points images situés dans un bloc carré ou rectangulaire de points images possèdent le même vecteur de déplacement, caractérisé par le fait que la détermination des vecteurs de déplacement $(X(m,n))$ est obtenue par réduction, à sa valeur minimale, d'une fonction cible composée $(Z)$, qui d'une part prend en compte les différences des valeurs de luminance des points images, associés entre eux, des deux images données et d'autre part évalue les différences entre les vecteurs de déplacement, dont les coordonnées sont voisines, à savoir ce qu'on appelle des vecteurs de déplacement voisins, à l'aide d'un degré d'uniformité $(P)$, et que la réduction de cette fonction cible à sa valeur minimale est exécutée de telle sorte que tout d'abord les vecteurs de déplacement qui réduisent à sa valeur minimale la fonction cible, sont déterminés moyennant la limitation selon laquelle les vecteurs de déplacement sont constants dans des blocs plus étendus que les blocs finalement recherchés, et qu'ensuite, chacun de ces blocs (16x16) est subdivisé en des blocs plus petits, possédant de préférence la même taille, jusqu'à ce que la taille recherchée (4x4) des blocs soit atteinte, la fonction cible étant à nouveau réduite par modification du vecteur de déplacement, après chaque diminution de la taille des blocs.

2. Procédé suivant la revendication 1, caractérisé par le fait que la subdivision des blocs est exécutée respectivement par division de moitié des longueurs des bords des blocs.

3. Procédé suivant la revendication 1, caractérisé par le fait que lors d'une insertion d'une image intercalaire entre les deux images, à chaque point image de cette image intercalaire sont associés deux points images, à savoir un point image tiré de la première image et un point image tiré de la seconde image.

4. Procédé suivant la revendication 1, caractérisé par le fait que les différences des valeurs de luminance de points images, qui se correspondent, des deux images successives à l'intérieur d'un bloc de points images sont évaluées au moyen de la somme des valeurs absolues des différences des valeurs de luminance et sont utilisées en tant que nombres à ajouter dans la fonction cible devant être réduite, ces nombres à ajouter formant une première composante de la fonction cible.

5. Procédé suivant la revendication 1, caractérisé par le fait que les différences des valeurs de luminance de points d'images, qui se correspondent, des deux images successives sont évaluées à l'intérieur d'un bloc de points images au moyen de la somme des carrés des différences des valeurs de luminance et sont utilisées comme nombres à ajouter dans la fonction cible à réduire, ces nombres à additionner formant une première composante de la fonction cible.

6. Procédé suivant la revendication 4 ou 5, caractérisé par le fait que les différences entre les vecteurs de déplacement voisins sont exprimées par les valeurs absolues de ces différences, la somme de ces valeurs absolues formant une seconde composante de la fonction cible et étant utilisée en tant que degré d'uniformité.

7. Procédé suivant la revendication 6, caractérisé par le fait qu'au moins l'une des deux composantes est multipliée par un facteur de pondération et que les produits correspondants forment, par addition, la fonction cible, la fonction cible possédant de préférence la forme $Z = Z1 + \alpha Z2$, Z1 étant la première composante, Z2 la seconde composante et $\alpha$ le facteur de pondération.

8. Procédé suivant la revendication 6, caractérisé par le fait qu'on utilise, comme voisins de chaque vecteur de déplacement, uniquement les quatre vecteurs de déplacement voisins, dont les coordonnées sont situées horizontalement et verticalement au voisinage des coordonnées du vecteur de déplacement considéré, c'est-à-dire que leurs coordonnées diffèrent de (0, 1), (0, -1), (1, 0) ou (-1, 0) par rapport aux coordonnées du vecteur de déplacement considéré.

9. Procédé suivant la revendication 6, caractérisé par le fait que, lors de l'initialisation du champ de vecteurs de déplacement avec des grands blocs -de préférence 16x16 points images (pixels)- c'est-à-dire tant qu'un vecteur de déplacement n'a pas encore été déjà calculé au moins une fois pour chaque bloc, le degré d'uniformité est modifié en ce sens qu'à la place des différences entre des vecteurs de déplacement voisins, on utilise les valeurs absolues des vecteurs de déplacement devant être optimisés -multipliées par un facteur de pondération- dans la fonction cible au moyen du degré d'uniformité.

10. Procédé suivant la revendication 2, caractérisé par le fait que lors de chaque étape de la subdivision des blocs, c'est-à-dire au début pour la taille maximale des blocs et ensuite après chaque subdivision des blocs, qui est exécutée de préférence jusqu'à une taille de bloc de 4x4 points images (pixels), chaque vecteur individuel de déplacement est optimisé successivement par modification dans une gamme considérée de valeurs jusqu'à ce qu'une valeur plus faible de la fonction cible ne puisse plus être trouvée de cette manière pour aucun vecteur de déplacement.

11. Procédé suivant l'une des revendications précédentes, caractérisé par le fait qu'on rend la gamme de valeurs des vecteurs de déplacement, à l'intérieur de laquelle les différents vecteurs de déplacement sont modifiés, pour réduire la fonction cible, dépendante des valeurs que possèdent les vecteurs de déplacement dans le champ de vecteurs de déplacement déjà calculé, de sorte que la gamme des valeurs pour l'optimisation du champ de vecteurs de déplacement est faible lorsque les vecteurs de déplacement voisins sont égaux ou semblables et plus étendu lorsque des vecteurs de déplacement voisins présentent entre eux des différences importantes.

12. Procédé suivant l'une des revendications précédentes, caractérisé par le fait que grâce à un système de travail en liste, on arrive à optimiser encore, du point de vue d'une réduction possible de la valeur de la fonction cible, uniquement les vecteurs de déplacement, dont les vecteurs de déplacement voisins ont changé depuis la dernière optimisation du vecteur de déplacement considéré, de sorte que, éventuellement, le degré d'uniformité a également changé, le système de travail en liste contenant une zone de travail en liste comportant un emplacement de mémoire pour chaque bloc en vue de la mémorisation d'une information de commande pour l'exécution de l'optimisation.

13. Procédé suivant la revendication 10 ou 11, caractérisé par le fait que, lors de l'optimisation d'un vecteur de déplacement déterminé, on ne considère pas chaque vecteur de déplacement de la gamme de valeurs considérée, mais uniquement un nombre partiel des vecteurs de déplacement, conformément à un schéma prédéterminé.

14. Procédé suivant la revendication 1 ou 6, caractérisé par le fait qu'en plus de la différence entre des vecteurs de déplacement voisins dans le champ de vecteurs de déplacement devant être calculé, on détermine également la différence entre les vecteurs de déplacement du champ actuel de vecteurs de déplacement et ceux du champ de vecteurs de déplacement calculé juste auparavant à partir d'un couple précédent d'images successives, et est utilisée dans le degré d'uniformité, et ce en vue de lisser le champ de vecteurs de déplacement dans la direction de l'axe des temps, c'est-à-dire pour équilibrer des champs de vecteurs de déplacement successifs.

15. Procédé suivant les revendications précédentes, selon lequel à partir respectivement de deux images successives transmises, moyennant une compression des données, d'un codeur à un décodeur par l'intermédiaire d'un canal, on détermine des champs de vecteurs de déplacement en vue de l'insertion d'images intercalaires, caractérisé par le fait que pour l'initialisation du procédé, on utilise des champs de vecteurs de déplacement correspondants, qui ont déjà été transmis auparavant.

# FIG 1

BILDDATEN-EINGABE → [16x16] INIT 16 → [16 x 16] ITER 16 → [16x16/8x8] L = L/2 → [8x8] ITER 8 → [8x8/4x4] L = L/2 → [4x4] ITER 4 → BEWEGGS.-VEKTOREN-AUSGABE

# FIG 2

BLOCKUNTERTEILUNG

# FIG 3

BEWEGUNGSVEKTOR X16(m,n) MIT DEN VIER
BENACHBARTEN BEWEGUNGSVEKTOREN

FIG 4

```
        ┌──────────────┐
        │    START      │
        └──────┬───────┘
        ┌──────┴───────┐
        │ BLOCKGRÖSSE   │
        │ L = L_max     │
        └──────┬───────┘
        ┌──────┴───────┐
        │     INIT      │
        └──────┬───────┘
        ┌──────┴───────┐
        │     ITER      │
        └──────┬───────┘
          ◇ L = L_min ◇ ──J──▶ ( STOP )
               │ N
        ┌──────┴───────┐
        │    L = L/2    │
        └──────────────┘
```

FIG 5

```
        ┌──────────────┐
        │     INIT      │
        └──────┬───────┘
        ┌──────┴───────────┐
        │ FUR ALLE BLÖCKE  │
        └──────┬───────────┘
   ┌───────────┴──────────────┐
   │ BERECHNE                 │
   │ BEWEGUNGSVEKTOR-         │
   │ FELD MIT                 │
   │ MODIFIZIERTEM            │
   │ GLATTHEITSMASS           │
   │ (OHNE VERGLEICH MIT      │
   │ NACHBARBLOCK)            │
   └───────────┬──────────────┘
        ┌──────┴───────┐
        │    RETURN     │
        └──────────────┘
```

# FIG 6

```
          ┌─────────┐
          │  ITER   │
          └────┬────┘
    ┌──────────┴──────────┐
    │  FÜR ALLE BLOCK-    │
    │  KOORDINATEN (m,n)  │
    ├─────────────────────┤
    │   FERTIG (m,n)=0    │
    └──────────┬──────────┘
               │
    ┌──────────┴──────────┐
    │  FÜR ALLE BLOCK-    │
    │  KOORDINATEN (m,n)  │
    └──────────┬──────────┘
```

FERTIG (m,n)=1 — J

N

FERTIG(m,n)=1

OPTI

BEWEGUNGSVEKTOR-FELD IM BLOCK (m,n) GEÄNDERT ? — N

J

FÜR DIE 4 NACHBARBLÖCKE (p,q) VON BLOCK (m,n)

FERTIG (p,q)=0

IST FÜR ALLE BLÖCKE (m,n) FERTIG (m,n)=1 — N

J

RETURN

# FIG 7

```
          ┌─────────┐
          │  OPTI   │
          └────┬────┘
```

BESTIMME WERTBEREICH FÜR BEWEGUNGSVEKTOR

BERECHNE BEWEGUNGSVEKTOR FÜR BLOCK (m,n) DURCH SUCHE NACH MINIMUM DER ZIELFUNKTION IM MOMENTANEN WERTBEREICH

RETURN

# FIG 8

AKTUELLES
BILD (BILD B)

VORHERGE-
HENDES
BILD (BILD A)

BERECHNUNG
DER SUMME
DER BETTRÄGE
DER BILDPUNKT-
DIFFERENZEN
MITTELS VEKTOREN

BERECHNUNG
DES GLATT-
HEITSMASSES

GEWICHTUNGS-
FAKTOR

STEUERUNG
ZUR OPTIMIE-
RUNG DES
BEWEGUNGS-
VEKTORFELDES

NEUE BEWEGUNGSVEKTOREN
EINSCHLIESSLICH DEREN
KOORDINATEN

SPEICHER
FUR BE-
WEGUNGS-
VEKTORFELD

BEWEGUNGS-
VEKTORFELD

$Z1$ $Z$ $Z2$

EP 0 293 644 B1

# FIG 9

BILDSEQUENZ - EINGANG

ÜBERTRAGENE UNTERABGETASTETE BILDSEQUENZ

REKONSTRUIERTE BILDSEQUENZ

ZEITL. UNTER-ABTASTUNG

CODER

KANAL

DECODER

ZEITLICHE INTERPOLATION

BEWEGUNGS-VEKTOR-ERMITTLUNG BLOCKGR. 16x16

BEWEGUNGS-VEKTOR-ERMITTLUNG BLOCKGR. 4x4

BEWEGUNGSVEKTORFELD MIT BLOCKGRÖSSE 16x16

BEWEGUNGSVEKTORFELD MIT BLOCKGRÖSSE 4x4

EP 0 293 644 B1